Europäisches Patentamt

European Patent Office

Office européen des brevets

(19)

(11) **EP 0 747 743 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int Cl.6: **G02B 13/22**

(21) Anmeldenummer: **95108559.6**

(22) Anmeldetag: **03.06.1995**

(54) **Beidseitig telezentrisches Messobjektiv**

Measurement objective telecentric on both sides

Objectif de mesure, télécentrique des deux côtés

(84) Benannte Vertragsstaaten:
**DE**

(43) Veröffentlichungstag der Anmeldung:
**11.12.1996 Patentblatt 1996/50**

(73) Patentinhaber: **Jos. Schneider Optische Werke Kreuznach GmbH & Co. KG**
**55543 Bad Kreuznach (DE)**

(72) Erfinder: **Wartmann, Rolf Dr.**
**Diplom-Mathematiker**
**D-55545 Bad Kreuznach (DE)**

(74) Vertreter: **Beckensträter, Margarethe Rechtsanwältin,**
**Falkensteiner Strasse 23**
**60322 Frankfurt am Main (DE)**

(56) Entgegenhaltungen:
**EP-A- 0 299 474**      **GB-A- 1 248 362**
**GB-A- 1 423 597**

- **SOVIET INVENTIONS ILLUSTRATED Week K01, 16. Februar 1983 Derwent Publications Ltd., London, GB; AN A2593 P81 & SU-A-909 652 (ZNAK POCHETA GEODES) 4. Juni 1980**
- **PATENT ABSTRACTS OF JAPAN vol. 16, no. 218 (P-1357) 21. Mai 1992 & JP-A-04 042 208 (DAINIPPON SCREEN MANUFACTURING COMPANY)**

## Beschreibung

Die Erfindung betrifft ein beidseitig telezentrisches Meßobjektiv für die berührungslose Längenmessung im zwei- und dreidimensionalen Raum.

Für die berührungslose Vermessung von Objekten in automatischen Fertigungslinien werden zunehmend Videokameras als Meßwertaufnehmer für Meßsysteme eingesetzt. Als Meßprinzip wird die Zentralprojektion der Objektpunkte in eine Bildebene angewendet. Dabei wird das Bild nach Digitalisieren im Bildverarbeitungsrechner interpretiert, und Strecken zwischen Konturmerkmalen des Objektes werden im Bild vermessen. Bekannte Voraussetzungen hierfür sind eine hinreichend genau definierte Kammerkonstante und die Lage des photogrammatischen Hauptpunktes. Diese Größen definieren die sogenannte innere Orientierung der Meßkamera.

Die Meßgenauigkeit der Videomeßtechnik ist direkt abhängig von der Genauigkeit und Stabilität der Parameter der inneren Orientierung. Diese Parameter, das Feststellen des Zusammenhanges zwischen der Meßgröße und der Anzeige des Meßgerätes, können durch das Kalibrieren im Innern der Kamera erfaßt werden.

Immer dann jedoch, wenn ein Meßsystem nicht nur für eine einzige Meßaufgabe vorgesehen ist und die Position der auszumessenden Gegenstände nicht mit hoher Genauigkeit eingehalten werden kann, bedeutet die Kamerakalibrierung eine zeitlich aufwendige, zusätzliche Belastung, denn sie muß bei jedem Wechsel der Meßaufgabe vorgenommen werden.

Bekannt ist es, um auf die Kamerakalibrierung zu verzichten, telezentrisch ausgelegte Objektive einzusetzen. Man erreicht dadurch eine Unabhängigkeit der Bildgröße von der Objektentfernung und ist nicht mehr gezwungen, den Meßgegenstand vorher zu justieren. Durch den Einsatz derartiger Objektive in automatischen Fertigungslinien wird eine effektive Qualitätskontrolle wesentlich vereinfacht. Allerdings ist man bei solchen optischen Systemen auch gezwungen, das Meßsystem zu kalibrieren. Die Ursache hierfür ist die Abhängigkeit des Abbildungsmaßstabes von der gewählten Bildebenenposition.

Um auf die Kamerakalibrierung vollständig zu verzichten, wurde bereits vorgeschlagen, beidseitig telezentrisch ausgebildete optische Systeme einzusetzen. Solche Objektive bestehen aus zwei optischen Teilsystemen, welche den gleichen prinzipiellen Aufbau haben und zwischen denen eine Irisblende angeordnet ist. Die Glieder des zweiten optischen Teilsystems sind dabei in umgekehrter Reihenfolge zum ersten optischen Teilsystem angeordnet. Solche telezentrischen Meßobjektive sind afokal und besitzen daher einen festen Abbildungsmaßstab, welcher sowohl von der Objekt- als auch von der Bildposition unabhängig ist.

Ein solches afokales und telezentrisches Objektiv wird in der SU - Patentschrift 935099 beschrieben. Aufgrund seiner Konstruktion weist es aber Pupillenaberration auf, d. h. trotz der afokalen Konstruktion sind nicht alle Hauptstrahlen telezentrisch. Diese Pupillenaberrationen bewirken eine Änderung der Verzeichnung beim Verschieben von Objekt- bzw. Bildebene. Daher ist dieses Objektiv für Meßzwecke ungeeignet.

In dem GB - Patent 1423597 wird ein afokales System zur Übertragung von Markierungen beschrieben, das keine Korrektion von Pupillenaberration und von Koma zuläßt. Es ist daher als Meßobjektiv ebenfalls ungeeignet.

Die in der EP 0299474 A2 beschriebene Lösung läßt aufgrund seiner Konstruktion keine großen Variationen von Objekt- bzw. Bildebene zu. Damit ist das in diesem Patent vorgeschlagene optische System für die vorgenannten Meßzwecke nur bedingt geeignet, da es eine Regelung der Schärfentiefe nicht ermöglicht und Abbildungsmaßstäbe, welche deutlich von-1 abweichen, bei gleichzeitig hoher Bildqualität nicht realisierbar sind. Weiterhin ist dieses Objektiv aufgrund der angestrebten kurzen Übertragungslänge aufwendig konstruiert, was außerdem zu dem Nachteil führt, daß bei einer größeren Variation der Objektebenenposition die Abbildungsqualität sehr nachläßt.

Es ist deshalb Aufgabe der Erfindung, ein beidseitig telezentrisches Meßobjektiv für berührungslose meßtechnische Systeme, das eine Innenkalibrierung der Kamera überflüssig macht, zu schaffen, welches konstruktiv einfach aufgebaut ist, und das in der Lage ist, über eine große Variationsbreite der Objektebenenpositionen eine hohe Abbildungsqualität zu erzielen.

Erfindungsgemäß wird diese Aufgabe gemäß den Merkmalen des Anspruchs 1 dadurch gelöst, daß die beiden optischen Teilsysteme zueinander so angeordnet sind, daß der hintere Brennpunkt des ersten Teilsystems mit dem vorderen Brennpunkt des zweiten Teilsystems zusammenfällt. Der Abbildungsmaßstab des Gesamtsystems ist gleich dem Verhältnis der Brennweiten der Teilsysteme.

Ein weiteres kennzeichnendes Merkmal der Erfindung ist, daß das dritte Glied ein streuender Meniskus ist, dessen konvexe Seite dem Objekt zugewandt ist.

Durch eine solche konstruktive Gestaltung des Meßobjektivs ist eine große Variationsbreite bei der Wahl von Objekt- bzw. Bildebenen möglich. Auch bei einer nicht optimalen Wahl von Objekt- bzw. Bildebenenposition bleibt die Abbildung frei von Koma, so daß die hohe Meßgenauigkeit innerhalb der gesamten Bandbreite der möglichen Objekt-Bild-Beziehungen gesichert ist. Ein nach diesem Prinzip aufgebautes optisches System besitzt, wenn es zur verkleinernden Abbildung eingesetzt wird, eine bildseitige Apertur von mindestens 0,14. Es ist für einen Bildkreisdurchmesser von 0,2·f'2 korrigiert, wobei f'2 die Brennweite des bildseitigen Teilsystems ist.

Eine Variation der Objektebenenlage ist in einem Bereich von $\pm 3\,\text{mm} \cdot (\frac{f'1}{f'2})^2$ möglich, ohne daß Einbußen bei der Bildqualität hingenommen werden müssen. Mit f'1 ist hierbei die Brennweite des objektseitigen Teilsystems bezeichnet.

Durch die Kombination solcher optischen Teilsysteme mit verschiedenen Brennweiten für die Bildseite bzw. die Objektseite können beidseitig telezentrische Meßobjektive für unterschiedliche Abbildungsmaßstäbe geschaffen werden.

Die Erfindung wird nachfolgend anhand von Ausführungsbeispielen und der Zeichnung näher beschrieben. Es zeigen:

Fig. 1:     den Aufbau eines Meßobjektivs für den Abbildungsmaßstab -1,

Fig. 2:     den Aufbau eines Meßobjektivs für den Abbildungsmaßstab -0.5,

Fig. 3:     den Aufbau eines Meßobjektivs für den Abbildungsmaßstab -0.25.

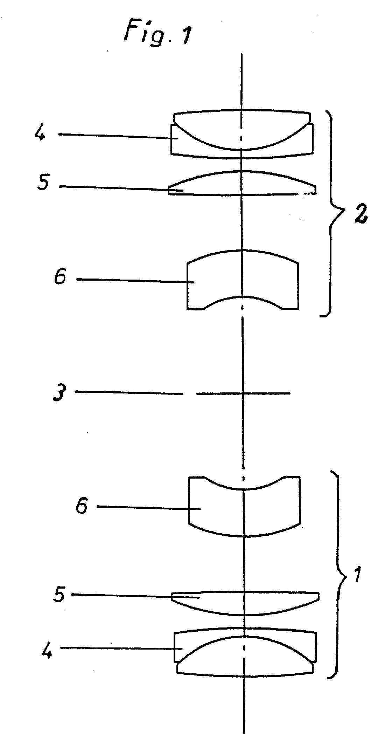

Fig. 1 zeigt ein beidseitig telezentrisches, aus einem bildseitigen optischen Teilsystem 1 und einem objektseitigen optischen Teilsystem 2 bestehendes Meßobjektiv mit einer mittig angeordneten Irisblende 3 für den Abbildungsmaßstab -1 und einer bildseitigen Apertur von 0,14. Die optischen Teilsysteme 1, 2 bestehen jeweils aus einem, dem Meßobjekt bzw. dem Abbild zugewandten Kittglied 4 mit positiver Brechkraft und einer streuenden Kittfläche. Das mittlere Glied des bild- bzw. objektseitigen Teilsystems 1, 2 ist jeweils eine Sammellinse 5 aus einem hochbrechenden Kronglas. Innen, der Irisblende 3 gegenüberliegend, ist jeweils ein streuender Meniskus 6, dessen konvexe Seite dem Objekt bzw. dem Abbild zugewandt ist, angeordnet.

In einem ersten Ausführungsbeispiel für ein beidseitig telezentrisches Meßobjektiv mit dem Abbildungsmaßstab -1 beträgt der Objekt-Bildabstand 284. Dabei ist innerhalb eines Entfernungbereiches von 71 bis 77 eine beliebige Objektlage zulässig, ohne daß Einbußen bei der Abbildungsqualität hingenommen werden müssen. Das bildseitige optische Teilsystem 1 und das objektseitige optische Teilsystem 2 sind durch die folgenden numerischen Daten bestimmt:

|     | r        | d     | $n_e$  | $\nu_e$ |
|-----|----------|-------|--------|---------|
| 1.  | 130.882  |       |        |         |
|     |          | 9.60  | 1.4891 | 70.2    |
| 2.  | -22.140  |       |        |         |
|     |          | 2.00  | 1.6072 | 37.8    |
| 3.  | -127.464 |       |        |         |
|     |          | 3.10  |        |         |
| 4.  | 40.965   |       |        |         |
|     |          | 5.70  | 1.6413 | 55.1    |
| 5.  | -597.046 |       |        |         |
|     |          | 13.50 |        |         |
| 6.  | 28.247   |       |        |         |

(fortgesetzt)

|     | r      | d     | $n_e$  | $\nu_e$ |
|-----|--------|-------|--------|---------|
|     |        | 11.39 | 1.5848 | 40.6    |
| 7.  | 15.845 |       |        |         |

Brennweite: 57

Abstand des hinteren Brennpunktes: 23.20

Hierbei bedeutet r den Krümmungsradius der entsprechenden brechenden Linsenfläche, $n_e$ und $\nu_e$ die Brechzahl bzw. Abbezahl für die Wellenlänge e = 546 nm des Glases, aus dem die betreffende Linse besteht, und d den Abstand zwischen den brechenden Linsenflächen, gemessen auf der optischen Achse.

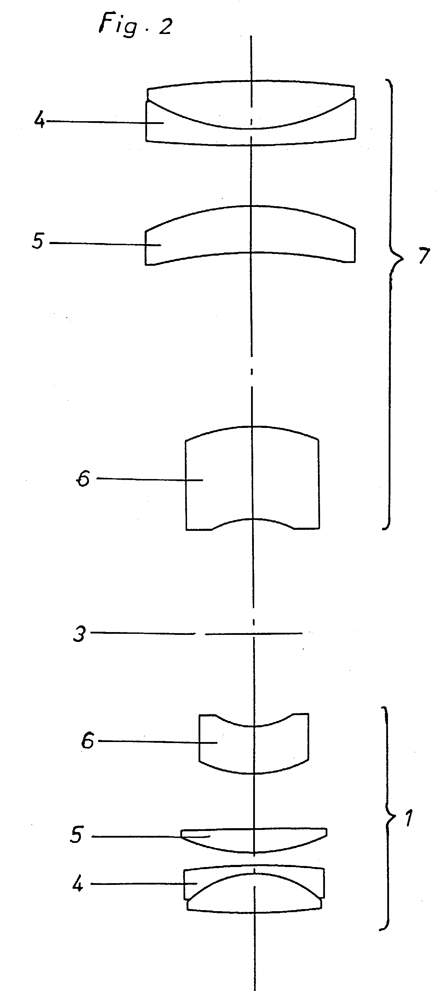

Gemäß einem zweiten, in Fig. 2 dargestellten Ausführungsbeispiel für ein beidseitig telezentrisches Meßobjektiv mit einem Abbildungsmaßstab -0.5 und einer bildseitigen Apertur von 0.14, kann die Lage der Objektebene innerhalb eines Entfernungsbereiches von 185 bis 209 variieren, ohne die Abbildungsqualität zu beeinträchtigen. Dabei schwankt der Objekt-Bildabstand zwischen 467 und 485. Das objektseitige Teilsystem 7 ist, bei gleichem konstruktiven Aufbau wie im ersten Ausführungsbeispiel, durch folgende numerische Daten bestimmt:

|     | r        | d     | $n_e$  | $\nu_e$ |
|-----|----------|-------|--------|---------|
| 1.  | 163.039  |       |        |         |
|     |          | 12.00 | 1.4891 | 70.2    |
| 2.  | -42.468  |       |        |         |
|     |          | 4.00  | 1.6072 | 37.8    |
| 3.  | -219.485 |       |        |         |
|     |          | 14.72 |        |         |
| 4.  | 53.840   |       |        |         |
|     |          | 11.40 | 1.6413 | 55.1    |
| 5.  | 96.899   |       |        |         |
|     |          | 42.58 |        |         |
| 6.  | 38.188   |       |        |         |
|     |          | 22.78 | 1.5848 | 40.6    |
| 7.  | 20.358   |       |        |         |

Brennweite: 114

Abstand des hinteren Brennpunktes: 28.07

Das bildseitige optische Teilsystem 1 ist das gleiche wie im ersten Ausführungsbeispiel beschrieben.

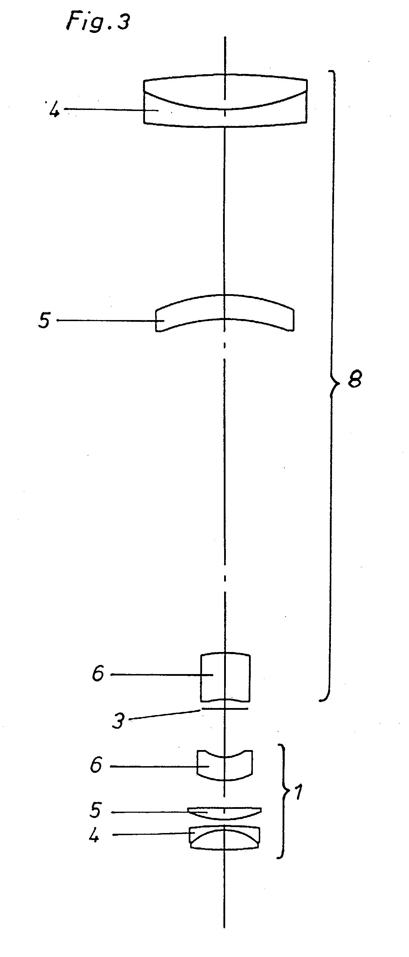

Bei einem dritten, in Fig. 3 dargestellten Ausführungsbeispiel eines Meßobjektivs für einen Abbildungsmaßstab von -0.25 und einer bildseitigen Apertur von 0.14, kann die Lage der Objektebene innerhalb eines Entfernungsbereiches von 246 bis 342 schwanken, ohne die Abbildungsqualität zu beeinträchtigen. Dabei bewegt sich der Objekt-Bildabstand zwischen 505 und 595. Das objektseitige optische Teilsystem 8 ist, bei gleichem konstruktiven Aufbau wie im ersten Ausführungsbeispiel beschrieben, durch die folgenden numerischen Parameter bestimmt:

|     | r        | d      | $n_e$  | $\nu_e$ |
|-----|----------|--------|--------|---------|
| 1.  | 243.547  |        |        |         |
|     |          | 17.00  | 1.4996 | 66.7    |
| 2.  | -88.326  |        |        |         |
|     |          | 8.60   | 1.6072 | 37.8    |
| 3.  | -342.441 |        |        |         |
|     |          | 82.40  |        |         |
| 4.  | 72.157   |        |        |         |
|     |          | 12.00  | 1.6413 | 55.1    |
| 5.  | 78.537   |        |        |         |
|     |          | 163.70 |        |         |
| 6.  | 47.746   |        |        |         |
|     |          | 22.80  | 1.5848 | 40.6    |
| 7.  | 29.641   |        |        |         |

Brennweite: 228

Abstand des hinteren Brennpunktes: 4.75

Das bildseitige optische Teilsystem 1 entspricht auch hier dem im ersten Ausführungsbeispiel beschriebenen.

**Patentansprüche**

1. Beidseitig telezentrisches Meßobjektiv für die berührungslose Längenmessung im zwei- und dreidimensionalen Raum, gebildet aus zwei gleichartigen optischen Teilsystemen, zwischen denen sich eine Irisblende befindet, wobei jedes optische Teilsystem aus jeweils drei Gliedern besteht, deren erstes Glied jeweils ein dem Meßobjektiv bzw. dem Abbild zugewandtes Kittglied mit positiver Brechkraft und einer streuenden Kittfläche, das zweite Glied jeweils eine Sammellinse aus einem hochbrechenden Kronglas und das dritte Glied jeweils ein streuender Meniskus ist und daß der Luftabstand zwischen den Sammellinsen und den streuenden Menisken der optischen Teilsysteme wesentlich größer ist, als der Abstand zwischen den Kittgliedern und den Sammellinsen,
**dadurch gekennzeichnet,** daß die einzelnen Glieder der optischen Teilsysteme (1, 2) in umgekehrter Reihenfolge zueinander so angeordnet sind, daß der hintere Brennpunkt des ersten optischen Teilsystems mit dem vorderen Brennpunkt des zweiten optischen Teilsystems zusammenfällt, so daß der Abbildungsmaßstab des Gesamtsystems gleich dem Verhältnis der Brennweiten der Teilsysteme ist und daß der streuende Meniskus (6) eine dem Objekt bzw dem Abbild zugewandte konvexe Seite hat, wobei die einzelnen Glieder des Meßobjektivs für jedes optische Teilsystem (1, 2) durch die folgenden numerischen Parameter bestimmt sind:

|     | r        | d      | $n_e$  | $\nu_e$ |
|-----|----------|--------|--------|---------|
| 1.  | 130.882  |        |        |         |
|     |          | 9.60   | 1.4891 | 70.2    |
| 2.  | -22.140  |        |        |         |
|     |          | 2.00   | 1.6072 | 37.8    |
| 3.  | -127.464 |        |        |         |
|     |          | 3.10   |        |         |
| 4.  | 40.965   |        |        |         |
|     |          | 5.70   | 1.6413 | 55.1    |
| 5.  | -597.046 |        |        |         |
|     |          | 13.50  |        |         |
| 6.  | 28.247   |        |        |         |
|     |          | 11.39  | 1.5848 | 40.6    |
| 7.  | 15.845   |        |        |         |

Brennweite: 57

Abstand des hinteren Brennpunktes: 23.20 .

2. Beidseitig telezentrisches Meßobjektiv nach Anspruch 1, gekennzeichnet durch ein objektseitiges optisches Teilsystem (7), das durch die folgenden numerischen Parameter bestimmt ist:

|     | r        | d      | $n_e$  | $\nu_e$ |
|-----|----------|--------|--------|---------|
| 1.  | 163.039  |        |        |         |
|     |          | 12.00  | 1.4891 | 70.2    |
| 2.  | -42.468  |        |        |         |
|     |          | 4.00   | 1.6072 | 37.8    |
| 3.  | -219.485 |        |        |         |
|     |          | 14.72  |        |         |
| 4.  | 53.840   |        |        |         |
|     |          | 11.40  | 1.6413 | 55.1    |
| 5.  | 96.899   |        |        |         |
|     |          | 42.58  |        |         |
| 6.  | 38.188   |        |        |         |
|     |          | 22.78  | 1.5848 | 40.6    |
| 7.  | 20.358   |        |        |         |

Brennweite: 114

Abstand des hinteren Brennpunktes: 28.07

3. Beidseitig telezentrisches Meßobjektiv nach Anspruch 1, gekennzeichnet durch ein objektseitiges optisches Teilsystem (8), das durch die folgenden numerischen Parameter bestimmt ist:

| | r | d | $n_e$ | $\nu_e$ |
|---|---|---|---|---|
| 1. | 243.547 | | | |
| | | 17.00 | 1.4996 | 66.7 |
| 2. | -88.326 | | | |
| | | 8.60 | 1.6072 | 37.8 |
| 3. | -342.441 | | | |
| | | 82.40 | | |
| 4. | 72.157 | | | |
| | | 12.00 | 1.6413 | 55.1 |
| 5. | 78.537 | | | |
| | | 163.70 | | |
| 6. | 47.746 | | | |
| | | 22.80 | 1.5848 | 40.6 |
| 7. | 29.641 | | | |

Brennweite: 228
Abstand des hinteren Brennpunktes: 4.75

## Claims

1. Twosidedly telecentric measuring objective for contacffree longitudinal measuring in two- and three-dimensional space, comprising two identical optical system portions the individual elements of which are arranged in reversed order, **characterised in that** betwen both optical system portions (1, 2) is fitted an iris diaphragm (3), and both optical system portions (1, 2) are arranged relative to each other in such a manner that the rear focal point of the first system portion (1) coincides with the front focal point of the second system portion (2), so that the imaging scale of the total system equals the ratio of focal width of the system portions, and both optical system portions (1, 2) are composed of three respective elements, and the first element is a sealing element (4) oriented towards the measuring objective or the image and with positive power of refraction and and a dispersing sealing surface, and the second element is a convergent lens (5) of a highly refractive crown glass, and the third element is a dispersing meniscus (6) with a convex side facing towards the objective or the image, and the air gap between the convergent lenses (5) and the dispersing menisci (6) of the optical system portions (1, 2) is substantially greater than the gap between the sealing elements (4) and the convergent lenses (5).

2. Bothsidedly telecentric measuring objective according to Claim 1, **characterised by** an optical system portion (1) at the image side and an optical system portion (2) at the objective side, which is determined by the following numeric parameters:

| | r | d | $n_e$ | $\nu_e$ |
|---|---|---|---|---|
| 1. | 130.882 | | | |
| | | 9.60 | 1.4891 | 70.2 |
| 2. | -22.140 | | | |
| | | 2.00 | 1.6072 | 37.8 |
| 3. | -127.464 | | | |
| | | 3.10 | | |
| 4. | 40.965 | | | |
| | | 5.70 | 1.6413 | 55.1 |
| 5. | -597.046 | | | |
| | | 13.50 | | |
| 6. | 28.247 | | | |
| | | 11.39 | 1.5848 | 40.6 |
| 7. | 15.845 | | | |

Focal Width: 57
Distance of rear Focal Point: 23.20

3. Bothsidedly telecentric measuring objective according to Claim 1, **characterised by** a system portion (7) at the objective side which is determined by the following numeric parameters:

| | r | d | $n_e$ | $\nu_e$ |
|---|---|---|---|---|
| 1. | 163.039 | | | |
| | | 12.00 | 1.4891 | 70.2 |
| 2. | -42.468 | | | |
| | | 4.00 | 1.6072 | 37.8 |
| 3. | -219.485 | | | |
| | | 14.72 | | |
| 4. | 53.840 | | | |
| | | 11.40 | 1.6413 | 55.1 |
| 5. | 96.899 | | | |
| | | 42.58 | | |
| 6. | 38.188 | | | |
| | | 22.78 | 1.5848 | 40.6 |
| 7. | 20.358 | | | |

Focal Width: 114
Gap or rear Focal Point: 28.07

4. Bothsidedly telecentric measuring objective according to Claim 1, **characterised by** an optical system portion (8) at the objective side, which is determined by the following numeric parameters:

| | r | d | $n_e$ | $\nu_e$ |
|---|---|---|---|---|
| 1. | 243.547 | | | |
| | | 17.00 | 1.4996 | 66.7 |
| 2. | -88.326 | | | |
| | | 8.60 | 1.6072 | 37.8 |

(continued)

| | r | d | $n_e$ | $\nu_e$ |
|---|---|---|---|---|
| 3. | -342.441 | | | |
| | | 82.40 | | |
| 4. | 72.157 | | | |
| | | 12.00 | 1.6413 | 55.1 |
| 5. | 78.537 | | | |
| | | 163.70 | | |
| 6. | 47.746 | | | |
| | | 22.80 | 1.5848 | 40.6 |
| 7. | 29.641 | | | |

Focal Width: 228
Gap of rear Focal Point: 4.75

## Revendications

1. Objectif de mesure télécentrique des deux côtés pour la mesure longitudinale sans contact dans l'espace bidimensionnel et tridimensionnel, formé de deux systèmes optiques partiels de même type dont les éléments individuels sont disposés en sens inverse les uns par rapport aux autres,

caractérisé en ce qu'un diaphragme à iris (3) est disposé entre les deux systèmes optiques partiels (1, 2) et les deux systèmes optiques partiels (1, 2) sont disposés l'un par rapport à l'autre pour que le foyer arrière du premier système partiel (1) coïncide avec le foyer avant du second (2), de sorte que l'échelle de représentation de l'ensemble du système global est égale au rapport des distances focales des systèmes partiels, en ce que les deux systèmes optiques partiels (1, 2) se composent chacun de trois éléments, le premier élément étant un élément de collage (4) qui est tourné vers l'objectif de mesure ou vers l'image, respectivement, qui présente une force de réfraction positive et qui comporte une surface de collage divergente, tandis que le deuxième élément consiste en une lentille convergente (5) en crown très réfringent et que le troisième élément consiste en un ménisque divergent (6) avec un côté convexe tourné vers l'objet ou vers l'image, respectivement, et en ce que la distance entre les lentilles convergentes (5) et les ménisques divergents (6) des systèmes optiques partiels (1, 2) est nettement supérieure à la distance entre les éléments de collage (4) et les lentilles convergentes (5).

2. Objectif de mesure télécentrique des deux côtés selon la revendication 1, caractérisé par un système optique partiel (1) situé côté image et par un système optique partiel (2) situé côté objet qui est défini par les paramètres numériques suivants :

| | r | d | $n_e$ | $\nu_e$ |
|---|---|---|---|---|
| 1. | 130.882 | | | |
| | | 9.60 | 1.4891 | 70.2 |
| 2. | -22.140 | | | |
| | | 2.00 | 1.6072 | 37.8 |
| 3. | -127.464 | | | |
| | | 3.10 | | |
| 4. | 40.965 | | | |
| | | 5.70 | 1.6413 | 55.1 |
| 5. | -597.046 | | | |
| | | 13.50 | | |
| 6. | 28.247 | | | |
| | | 11.39 | 1.5848 | 40.6 |
| 7. | 15.845 | | | |

Distance focale : 57
Ecartement du foyer arrière : 23.20

3. Objectif de mesure télécentrique des deux côtés selon la revendication 1, caractérisé par un système optique partiel (7) situé côté objet qui est défini par les paramètres numériques suivants :

| | r | d | $n_e$ | $\nu_e$ |
|---|---|---|---|---|
| 1. | 163.039 | | | |
| | | 12.00 | 1.4891 | 70.2 |
| 2. | -42.468 | | | |
| | | 4.00 | 1.6072 | 37.8 |
| 3. | -219.485 | | | |
| | | 14.72 | | |
| 4. | 53.840 | | | |
| | | 11.40 | 1.6413 | 55.1 |
| 5. | 96.899 | | | |
| | | 42.58 | | |
| 6. | 38.188 | | | |
| | | 22.78 | 1.5848 | 40.6 |
| 7. | 20.358 | | | |

Distance focale : 114
Ecartement du foyer arrière : 28.07

4. Objectif de mesure télécentrique des deux côtés selon la revendication 1, caractérisé par un système optique partiel (8) situé côté objet qui est défini par les paramètres numériques suivants :

| | r | d | $n_e$ | $\nu_e$ |
|---|---|---|---|---|
| 1. | 243.547 | | | |
| | | 17.00 | 1.4996 | 66.7 |
| 2. | -88.326 | | | |
| | | 8.60 | 1.6072 | 37.8 |

(suite)

| | r | d | $n_e$ | $\nu_e$ |
|---|---|---|---|---|
| 3. | -342.441 | | | |
| | | 82.40 | | |
| 4. | 72.157 | | | |
| | | 12.00 | 1.6413 | 55.1 |
| 5. | 78.537 | | | |
| | | 163.70 | | |
| 6. | 47.746 | | | |
| | | 22.80 | 1.5848 | 40.6 |
| 7. | 29.641 | | | |

Distance focale : 228
Ecartement du foyer arrière : 4.75

# Fig. 1

*Fig. 2*

Fig.3